# EUROPEAN PATENT APPLICATION

(11) **EP 0 953 627 A1**
(43) Date of publication of application: **03.11.1999**
(21) Application number: 98107676.3
(22) Date of filing: 28.04.1998
(51) Int. Cl.: C10J 3/00, C10J 3/02, C10J 3/08, C10J 3/84

(54) **Method and apparatus for, in a fixed-bed gasifier, converting tar and possibly particles into combustible gas components**

(71) Applicant: ANSALDO VOLUND A/S, 1251 Kobenhavn K (DK)
(72) Inventor: Ammundsen, Niels, 7000 Fredericia (DK)
(74) Representative: Roerboel, Leif

(57) **Abstract**

The method for conversion of tar possibly containing other waste products such as particles, into combustible gas components is performed in a fixed-bed gasifier, preferably an upstream gasifier.

The method comprises
a) introducing the tar into the gasifier at a position, where the temperature of the coke in the gasifier has a temperature suitable to crack the tar, and
b) before and/or concurrently with the introduction of the tar supplying supplementary air into the coke at the position for the introduction of tar, to compensate for the lowering of the temperature induced by the introduction and cracking of the tar, and evaporation of possible water present in the introduced tar.

Hereby it is achieved that the temperature of the coke is kept at a sufficient level to ensure cracking of the introduced tar.

## Description

The present invention relates to a method for, in a fixed-bed gasifier, converting tar into a combustible gas product. Moreover, the invention relates to an apparatus for carrying out the method.

Fixed-bed gasifiers are generally used to convert solid fuel into a combustible gas phase. Different types of biomass like wood-chips, grated straw, etc. can be used as solid fuel in a fixed-bed gasifier. Two different types of fixed-bed gasifiers are known as updraft and downdraft gasifiers. The updraft type gasifier is preferred for gasification of biomass with a high water content and advantageously provides a gas at a low temperature (below 100°C).

In order to use the produced gas in a gas engine or a gas turbine, it is necessary to remove tar and particles from the gas. The main reason for this is to avoid coke deposit problems inside the engine or turbine. One way of cleaning the gas could be using a catalyst to crack the tar, but this has not proven to be satisfactory, possibly due to the low temperature of the gas. Another way could be using filter material to remove the tar and particles, this will generate a waste problem consisting of the filter material containing tar, and the calorific content in the tar will be lost. A third way could be wet scrubbing of the gas which again will result in a waste problem.

It is the object of the present invention to solve some of the above problems and to provide a method, by which tar and possibly particles and other waste products are converted into a combustible gas product.

This is achieved by a method in accordance with claim 1 and by an apparatus in accordance with claim 8.

By introducing the tar and possibly particles as mentioned, the tar is cracked in the gasifier and the introduction of supplementary air before and during the introduction of the tar makes it possible to maintain or even raise the temperature of the coke in the gasifier, whereby the suitable temperature for cracking the tar can be ensured.

Depending on the source for the tar, the introduced tar may be mixed with other products, such as water and particles from a wet scrubber. However, by the invention it is possible to compensate for the lowering of the temperature induced by the tar and these other products, by adjusting the amount of supplementary air.

Preferably, the introduction of tar is performed intermittently, whereby the means for introducing the tar can be kept at a low temperature outside of the coke in the gasifier between periods of introduction of tar.

Moreover, the introduction is preferably distributed over a certain volume of the coke, e.g. by using a reciprocable lance for the introduction of tar and supplementary feeding of air during the reciprocating movement of the lance. Several lances may he used dependent on the amount of tar to be introduced.

The following detailed description of the invention will be made with reference to the drawing, in which
Figure 1 shows an updraft gasifier, in which the invention can be used, and
Figure 2 shows a lance for introduction of tar and introduction of supplementary air in accordance with the invention.

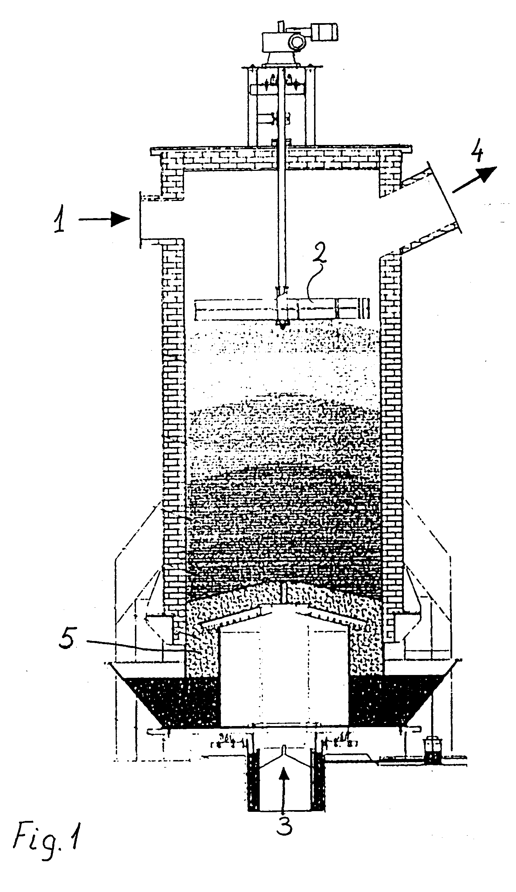

In the updraff gasifier shown in Figure 1 solid fuel is introduced into the reaction chamber at the infeed 1 and distributed evenly over the surface of the reaction chamber by means of a stirring device 2. The solid fuel is in a manner known per se subjected to drying, pyrolysis, reduction and oxidation on its way downwards in the reaction chamber, these processes being sustained by the infeed of steam and air at the bottom 3 of the reaction chamber. At a certain level, relatively close to the bottom of the fixed-bed gasifier, the product mainly consists of coke, i.e. primarily carbon and non-combustible ash products. The resulting gas product leaves the reaction chamber at 4 and the ash is taken out at the bottom 5. The produced gas leaving the reactor at 4 contains various combustible gas components, which may be used e.g. in a gas engine or a gas turbine for the production of electrical power.

As mentioned above it is necessary to clean the gas from particles and tar before such use. The cleaning of the gas is preferably performed in a wet scrubber but may be done in any convenient way provided that the removed tar can be reintroduced into the gasifier as explained in the following.

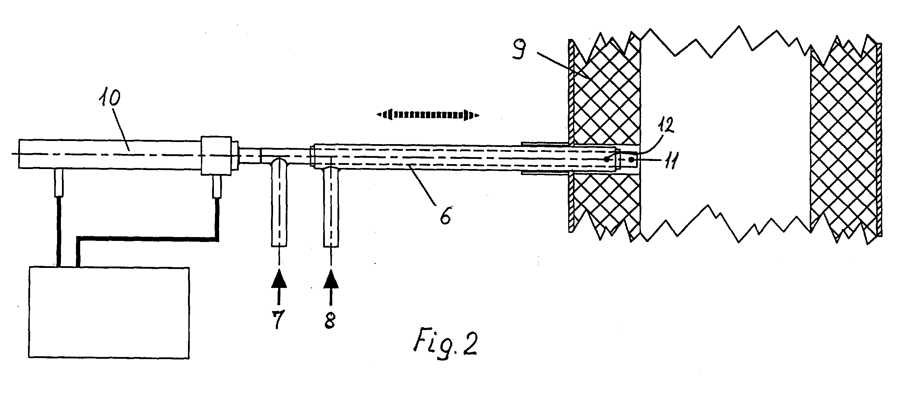

Figure 2 shows an apparatus for reintroduction of tar from the cleaning system into the gasifier. The shown apparatus comprises a lance 6 comprising two concentrially mounted tubes, one for reintroduction of tar 7 and one for supplying supplementary air 8 into the coke in the gasifier 9. The lance 6 is mounted for a reciprocating movement by means of hydraulic or pneumatic means 10, so that the lance 6 can move from the shown retracted position to an inserted position where the tip of the lance is positioned close to the opposite wall of the reaction chamber 9. During the forward movement of the lance 6 into the reaction chamber, air 8 may be introduced into the coke in the chamber via the outer tube and expelled into the coke via nozzles 12 positioned close to the tip of the lance 6. By this introduction of air before introduction of tar into the coke, the coke temperature is raised in order to ensure a suitable temperature for the cracking of the tar. During the backwards movement of the lance 6 towards the position shown in Figure 2, tar 7 is introduced via the inner tube and expelled into the coke via nozzles 11 at the tip of the lance 6. The introduction of tar into the coke is performed during the backwards movement of the lance 6 in the reaction chamber, whereby the introduced tar is distributed over the full length of the movement of the lance 6. Air 8 may be supplied into the coke concurrently with the introduction of the tar 7, in order to maintain or raise the temperature during the backwards movement of the lance 6. In this way it is possible to ensure a proper cracking of the tar reintroduced into the reaction chamber.

Depending on the size of the gasifier and the amounts of tar to be reintroduced, one or more lances 6 may be used in the same gasifier.

Tests performed on an updraft gasifier have shown that the reintroduction of tar can be performed without any disturbances of the gasifier, and gas analyses show that the content of combustible gas components rose markedly in periods of reintroduction of tar.

The above description only mentions reintroduction of tar from a gas cleaning system downstream of the gasifier, however, it is the intention that the invention also comprises the possibility of introducing tar from other sources.

## Claims

1. Method for conversion, in a fixed-bed gasifier, preferably an upstream gasifier, of tar possibly containing other waste products such as particles, into combustible gas components, **characterized** by comprising
a) introducing the tar into the gasifier at a position, where the temperature of the coke in the gasifier has a temperature suitable to crack the tar, and
b) before and/or concurrently with the introduction of the tar supplying supplementary air into the coke at the position for the introduction of tar, to compensate for the lowering of the temperature induced by the introduction and cracking of the tar, and evaporation of possible water present in the introduced tar.

2. Method in accordance with claim 1, **characterized** by the introduction of tar being performed intermittently.

3. Method in accordance with claim 1 or 2, **characterized** by the tar and supplementary air being distributed over a certain volume of the high temperature coke in the gasifier.

4. Method in accordance with any of the preceding claims, **characterized** by controlling the supply of supplementary air in such a way, that the temperature of the coke is generally maintained at a constant level sufficient to crack the tar, despite the introduction of the tar.

5. Method in accordance with any of the preceding claims, **characterized** in that the tar being introduced originates from a gas cleaning system positioned downstream of the gasifier.

6. Method in accordance with any of the preceding claims, **characterized** by the resulting gas being used in a gas engine or turbine for generating electric power.

7. Method in accordance with any of the preceding claims, **characterized** by the "waste" heat from the processes being used for district heating purposes.

8. Apparatus for carrying out the method in accordance with any of the claims 1-7, comprising a fixed-bed gasifier for gasification of solid fuel, **characterized** by further comprising
means for introducing tar into the gasifier at a point, where the temperature of the coke is suitable to crack the tar, and means for introducing air into the coke close to the position for introduction of tar before and/or concurrently with the reintroduction of the tar.

9. Apparatus in accordance with claim 8, **characterized** in that the means for introducing the tar and introducing the air is a lance (6) comprising a tube (7) for the introduction of tar and a tube (8) for introduction of air, the two tubes (7,8) comprising nozzles (11,12) for expelling tar and air, respectively, into the coke.

10. Apparatus in accordance with claim 9, **characterized** in that the two tubes of the lance (6) are mounted concentrically with the air tube externally of the tar tube.

11. Apparatus in accordance with claim 9 or 10, **characterized** by the lance (6) being reciprocable between a fully inserted position and a fully extracted position, externally of the high temperature coke, and the air being introduced during the insertion and retraction of the lance (6), whereas the tar is being introduced during the retraction only.

12. Apparatus in accordance with claim 11, **characterized** by the reciprocating movement of the lance (6) being controlled by a pneumatic or hydraulic cylinder (10) connected to the lance (6).

13. Apparatus in accordance with any of the claims 8-12, **characterized** by comprising several lances (6).
